Europäisches Patentamt

European Patent Office

Office européen des brevets

(11) Veröffentlichungsnummer: **0 031 551**
**A1**

(12) **EUROPÄISCHE PATENTANMELDUNG**

(21) Anmeldenummer: **80108006.0**

(22) Anmeldetag: **18.12.80**

(51) Int. Cl.³: **G 21 C 13/04, G 21 C 19/20**

(30) Priorität: **22.12.79 DE 2952025**

(43) Veröffentlichungstag der Anmeldung: **08.07.81**
**Patentblatt 81/27**

(84) Benannte Vertragsstaaten: **AT CH FR IT LI**

(71) Anmelder: **BROWN BOVERI REAKTOR GmbH, Heppenheimerstrasse 27-29, D-6800 Mannheim 31 (DE)**

(72) Erfinder: **Dronkers, Peter, Dipl.-Ing., Goethestrasse 8, D-6800 Mannheim 1 (DE)**

(54) **Stutzendurchführung für den Deckel eines Kernreaktor-Druckbehälters.**

(57) Bei einer derartigen Stutzendurchführung besteht der Stutzen (6) aus einem anderen Werkstoff als der Deckel (1). Ausserdem ist der Deckel (1) mit einer Innenplattierung versehen. Zur Vermeidung von Wärmespannungen an der kraftschlüssigen Verbindung (15) zwischen Stutzen (6) und Deckel (1) ist zwischen der Schulter (9) des Stutzens (6) und der Auflagefläche (7) des Deckels (1) ein Ausgleichsring (8) vorgesehen. Die Höhe «h» des Ausgleichsringes (8) und dessen Werkstoff sind dabei derart gewählt, dass die aufgrund der Wärmedehnung erfolgende Längenänderung von Stutzen- und Deckelwerkstoff im Bereich der von der Schulter (9) bis zur kraftschlüssigen Verbindung (15) reichenden Strecke ausgeglichen ist. Werkstoff und Höhe «h» können auch so gewählt sein, dass sich bei Erwärmung im Bereich der kraftschlüssigen Verbindung ein vorgebbarer Spannungsunterschied aufbaut.

0031551

BABCOCK-BROWN BOVERI  Mannheim, den 9.12.1980
REAKTOR GmbH  SG 151.70 - 92/79
Heppenheimerstr. 27-29
6800 Mannheim 31

<u>Stutzendurchführung für den Deckel eines Kernreaktor-</u>
<u>Druckbehälters.</u>

Die Erfindung betrifft eine im Oberbegriff des Anspruchs 1
angegebene Stutzendurchführung.

Eine derartige Stutzendurchführung ist aus der CH - PS
38 37 06 bekannt. Der aus einem austenitischen Werkstoff
bestehende Stutzen ist in den ferritischen Teil des
Deckels eingeschraubt. Diese kraftschlüssige Verbindung ist
aufgrund der unterschiedlichen Ausdehnungskoeffizienten bei
Temperaturveränderungen großen Spannungen ausgesetzt. Die
dort im Bereich der Verbindungsschweißnaht vorgesehene Nut
bringt keinen Ausgleich der Spannungen an der Gewindeverbindung, da an dieser Stelle die Spannungsunterschiede
weiterhin vorhanden sind. Es besteht bei dieser Ausbildung
auch keine Möglichkeit die Spannungen zu beeinflussen und z.B.
eine gewünschte Vorspannung im Bereich der kraftschlüssigen
Verbindung aufzubauen.

Der Erfindung liegt die Aufgabe zugrunde die Wärmespannungen
bei einer Stutzendurchführung der eingangs genannten Art
an den tragenden Verbindungsstellen beeinflußbar zu machen.

Gelöst wird die Aufgabe erfindungsgemäß dadurch, daß zwischen der Schulter des Stutzens und der Auflagefläche des Deckels ein Ausgleichsring vorgesehen ist.

Der Ausgleichsring erlaubt je nach seiner Zusammensetzung und Höhe eine Variierung der Spannungen im Bereich der kraftschlüssigen Verbindung bis hin zum vollkommenen Spannungsausgleich.

Bevorzugte Ausgestaltungen der Stutzendurchführung sind in den Unteransprüchen angegeben.

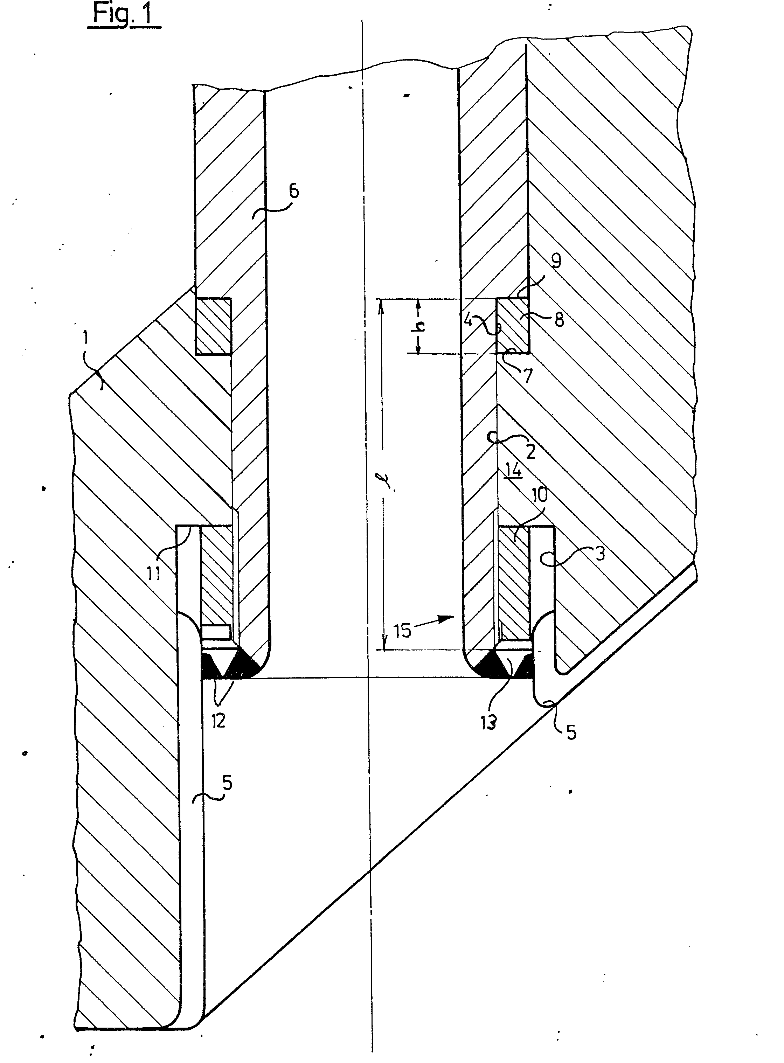

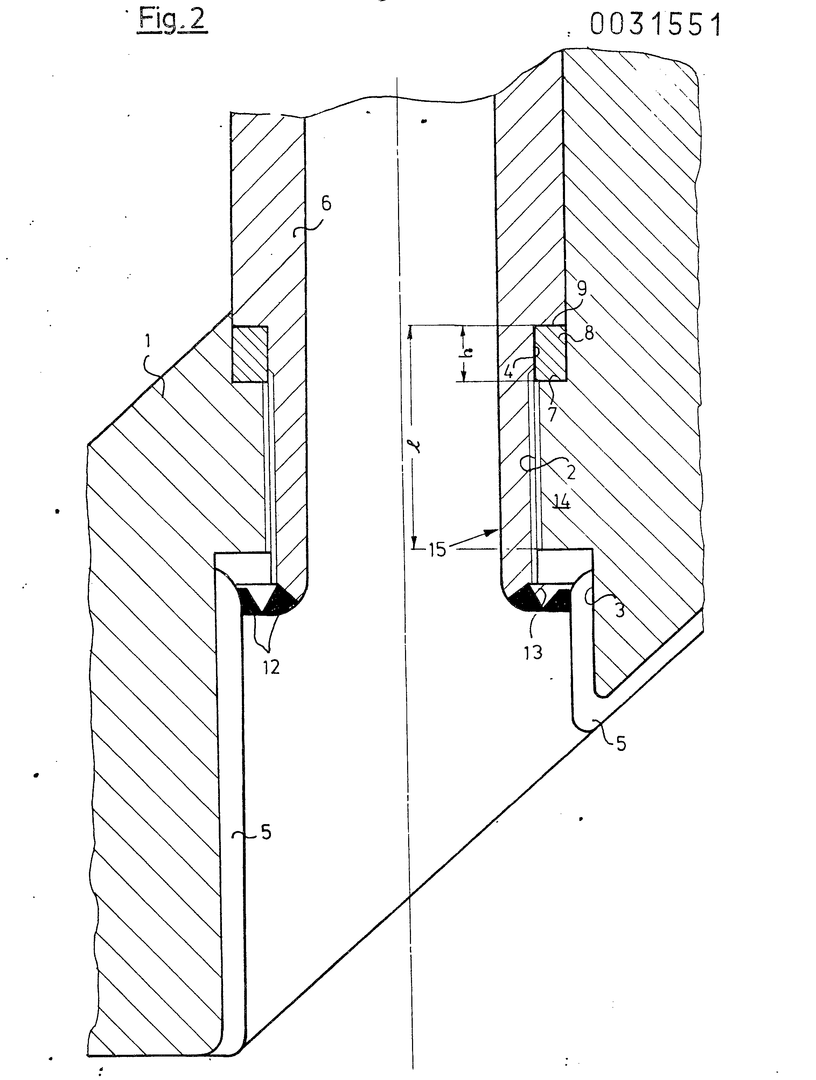

Anhand von zwei Ausführungsbeispielen, die in den schematischen Zeichnungen der Fig. 1 und 2 dargestellt sind, wird die erfindungsgemäße Vorrichtung beschrieben.

Die Fig. 1 zeigt den Teilbereich des Deckels 1 eines nicht dargestellten Kernreaktor-Druckbehälters, der mit einer Durchgangsbohrung 2 versehen ist, die an ihren gegenüberliegenden Enden als Stufenbohrung 3,4 ausgebildet ist. Der Deckel besteht aus einem ferritischen Werkstoff mit einem Wärmedehnungskoeffizienten von $13.10^{-6}$ und ist an seiner Innenseite mit einer Plattierung 5 versehen, die bis in die Stufenbohrung 3 des Deckels 1 reicht. Ein Stutzen 6 aus einer Nichteisenbasislegierung der DIN-Bezeichnung Ni Cr 15 Fe mit einem Wärmeausdehnungskoeffizienten von $14.10^{-6}$ durchsetzt die Durchgangsbohrung 2 und ragt mit seinem mit einem Gewinde versehenen Ende in den Bereich der Stufenbohrung 3 hinein. Auf der durch die Stufenbohrung 4 gebildeten Auflagefläche 7 ist ein Ausgleichsring 8 aus austenitischem Werkstoff mit dem Wärmedehnungskoeffizient $17.10^{-6}$ angeordnet auf dem sich der Stutzen 6 über seine Schulter 9 abstützt. Über die in das Gewinde des Stutzens 6 eingreifende Mutter 10, die an der Fläche 11 der Stufenbohrung 3 zur Anlage kommt, ist der Stutzen im Deckel festgelegt. Mit einer nur der Abdichtung dienenden Schweißnaht 12 ist der Stutzen 3 unter Zwischenschaltung eines Dichtringes 13 mit der Plattierung 5 verbunden.

0031551

Die Mutter 10 besteht aus einem ferritischen Werkstoff, der den gleichen Wärmedehnungskoeffizient wie der Deckelwerkstoff besitzt. Beträgt bei den vorgenannten Werkstoffen die mit "l" bezeichnete Strecke zwischen der Schulter 9 und der kraftschlüssigen Gewindeverbindung achtzig mm so muß die Höhe "h" des Ausgleichsringes 8 zwanzig mm betragen. Bei einer Erwärmung um 300$^{o}$C ergibt sich für den Stutzen im Bereich der achtzig mm langen Strecke eine Längung von 0,336 mm. Dieser Wert wird auch zusammen von der Mutter 10, dem Vorsprung 14 und dem Ausgleichsring 8 erreicht. Damit ist sichergestellt, daß im Bereich der kraftschlüssigen Gewindeverbindung keine Wärmespannungen auftreten.

Bei dem Ausführungsbeispiel nach Fig. 2 ist der Stutzen 6 unmittelbar in die mit einem Innengewinde versehene Durchgangsbohrung 2 eingeschraubt. Ebenso wie beim Ausführungsbeispiel nach Fig. 1 ist auf der Auflagefläche 7 ein Ausgleichsring 8 angeordnet, auf dem sich der Stutzen 6 über seine Schulter 9 abstützt. Auch hier wird die Höhe "h" und der Werkstoff des Ausgleichsringes 8 derart gewählt, daß bei einer Temperaturänderung die Längung des Stutzens im Bereich der Strecke "l" gleich der Längung von Vorsprung 14 plus Höhe des Ausgleichsringes 8 ist.

Wird ein bestimmter Spannungsunterschied gewünscht, so kann dies durch Änderung der Höhe "h" bzw. der Werkstoffzusammensetzung des Ausgleichsringes 8 erzielt werden.

Mit der erfindungsgemäßen Stutzendurchführung ist es gelungen, die Wärmespannungen im Bereich der kraftschlüssigen Verbindung zu steuern.

0031551

## Bezugszeichenliste

| | |
|---|---|
| 1 | Deckel |
| 2 | Durchgangsbohrung |
| 3,4 | Stufenbohrung |
| 5 | Plattierung |
| 6 | Stutzen |
| 7 | Auflagefläche |
| 8 | Ring |
| 9 | Schulter |
| 10 | Mutter |
| 11 | Fläche |
| 12 | Schweißnaht |
| 13 | Dichtring |
| 14 | Vorsprung |
| 15 | kraftschlüssige Verbindung |

P a t e n t a n s p r ü c h e

1. Stutzendurchführung für den mit einer Innenplattierung aus austenitischem Werkstoff versehenen Deckel eines Kernreaktor-Druckbehälters, wobei der Deckel und der mit ihm kraftschlüssig verbundene Stutzen aus unterschiedlichen Werkstoffen bestehen und wobei der Stutzen mit der Innenplattierung über eine Dichtschweißnaht verbunden ist, dadurch gekennzeichnet, daß zwischen der Schulter (9) des Stutzens (6) und der Auflagefläche (7) des Deckels (1) ein Ausgleichsring (8) vorgesehen ist.

2. Stutzendurchführung nach Anspruch 1, dadurch gekennzeichnet, daß die Höhe "h" und der Werkstoff des Ausgleichsringes (8) derart gewählt sind, daß die aufgrund der Wärmedehnung erfolgende Längenänderung von Stutzen- und Deckelwerkstoff im Bereich der von der Schulter (9) bis zur kraftschlüssigen Verbindung (15) reichenden Strecke ausgeglichen ist.

3. Stutzendurchführung nach Anspruch 1, dadurch gekennzeichnet, daß die Höhe "h" und der Werkstoff des Ausgleichsringes (8) derart gewählt sind, daß sich bei Erwärmung im Bereich der kraftschlüssigen Verbindung ein vorgebbarer Spannungsunterschied aufbaut.

4. Stutzendurchführung nach einem der Ansprüche 1-3, dadurch gekennzeichnet, daß der Deckel (1) aus einem ferritischen Werkstoff, der Stutzen (6) aus einer Nichteisenbasislegierung der Art Ni Cr 15 Fe und der Ausgleichsring (8) aus einem austenitischem Werkstoff besteht.

Fig. 1

# Fig.2

| Europäisches Patentamt | **EUROPÄISCHER RECHERCHENBERICHT** | 0031551 Nummer der Anmeldung EP 80108006.0 |

| **EINSCHLÄGIGE DOKUMENTE** | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | AT - B - 311 508 (SIEMENS) <br><br> + Fig. 1-3; Seite 2, Zeilen 52-61; Seite 3, Zeilen 12-22 + <br><br> -- | 1,4 | G 21 C 13/04 <br> G 21 C 19/20 |
| | DE - A1 - 2 825 934 (VOEST) <br><br> + Anspruch 1; Fig. 1-3 + <br><br> -- | 1,2,3 | |
| | DE - A - 2 130 590 (WESTINGHOUSE) <br><br> + Fig. 1A, 1B; Seiten 10,11 + <br><br> -- | 1,2,3 | RECHERCHIERTE SACHGEBIETE (Int. Cl.³) |
| X | DE - A - 1 903 662 (KINGDOM ATOMIC) <br><br> + Fig. 1; Seite 5, 2. Absatz + <br><br> ---- | 1-3 | G 21 C 3/00 <br> G 21 C 13/00 <br> G 21 C 19/00 |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort <br> WIEN | Abschlußdatum der Recherche <br> 30-03-1981 | Prüfer <br> KRAL |

EPA form 1503.1  06.78